Europäisches Patentamt

European Patent Office

Office européen des brevets

(11) Publication number: **0 258 992**
**A2**

# EUROPEAN PATENT APPLICATION

(21) Application number: 87306556.9

(22) Date of filing: 24.07.87

(51) Int. Cl.4: **B23Q 3/157**

(30) Priority: 29.07.86 JP 177984/86
29.07.86 JP 116561/86 U

(43) Date of publication of application:
09.03.88 Bulletin 88/10

(84) Designated Contracting States:
CH DE GB LI

(71) Applicant: SEIKO SEIKI KABUSHIKI KAISHA
3-1, Yashiki 4-chome
Narashino-shi Chiba(JP)

(72) Inventor: Kubota, Minoru
3-1, Yashiki 4-chome
Narashino-shi Chiba(JP)

(74) Representative: Miller, Joseph et al
J. MILLER & CO. Lincoln House 296-302 High
Holborn
London WC1V 7JH(GB)

(54) Automatic tool changer.

(57) An automatic tool changer for automatically exchanging tools (T, t) between a tool magazine (37)
and a machine tool spindle (9), the automatic tool
changer comprising a tool exchange arm (1) having
chuck means (2, 3) adapted to grip said tools (T, t);
rotation effecting means (13, 23, 33, 34) for rotating
the tool exchange arm (1); and axial movement
effecting means (16, 25, 28) for effecting axial movement of the tool exchange arm (1) characterised in
that each of the rotation effecting means (13, 23, 33,
34) and the axial movement effecting means (16, 25,
28) comprises a cam mechanism (23, 25) and a
pressure fluid operated mechanism (33, 34, 28)
which are independent of each other, the cam
mechanisms (23, 25) being operable to exchange a
tool (T, t) between the spindle (9) and the chuck
means (2, 3) and the pressure fluid operated
mechanisms(33, 34, 28) being operable to exchange
a tool (T, t ) between the tool magazine (37) and the
chuck means (2, 3) while a machining operation is
being carried out.

FIG.1

## "AUTOMATIC TOOL CHANGER"

The present invention relates to an automatic tool changer which may, for example, be used in a machining centre.

A tool changer has been used in a machining centre to exchange a tool held by the main spindle of a machine tool for a tool held by a tool pot of a tool magazine.

This tool changer uses a tool exchange arm having two chucks that are adapted to grip tools. When the tool held by the main spindle is to be exchanged, the tool exchange arm rotates into an exchange position, where one of the chucks grips a new tool and the other chuck grips the old tool. Then, the old tool is pulled from the spindle. Subsequently, the tool exchange arm is rotated so that the new tool held by the said one chuck may arrive on the axis of the main spindle. Thereafter, the tool exchange arm translates along the axis of the spindle to press the new tool into the spindle, so as to install it there.

Accordingly, the operation for exchanging a tool by using this tool exchange arm involves a rotating step, a withdrawing step, a further rotating step, a pressing step, and another rotating step. These steps have been carried out in this order.

When the operation for exchanging the tool is performed, the tool exchange arm must return the old tool on the other chuck to the tool magazine and install the new tool which is required for the next machining operation on the main spindle. For this reason, the tool exchange arm is rotated through a large angle. This makes high-speed operation very difficult.

After the old tool has been exchanged for the new one, the tool exchange arm must be rotated into a location where the tool exchange arm impedes neither the movement of the main spindle nor the movement of the tool magazine. Then, the tool exchange arm must be on standby. Hence, the structure of the tool exchange arm is made complex. This also makes high speed operation very difficult.

In this way, when tools are exchanged between the tool pot and the main spindle, the tool exchange arm is required to rotate into the exchange position in which a new tool and the old tool are gripped, to pull the tools from the main spindle and from the tool pot of the magazine, to rotate so as to exchange the tools, to press the changed tools into the spindle and into the tool pot respectively, and to rotate into the aforementioned standby position.

An hydraulic mechanism or a cam mechanism has been employed to drive the tool exchange arm so that it makes such translational and rotary movement.

However, the mechanism described above does not work quickly and so the tool change operation is completely a standby process in a series of working steps. The slowness of tool exchange leads to a deterioration in the working efficiency. Especially, for a high-speed machine, it has been urgently required to shorten the time taken to exchange tools and to carry out the exchanging process with safety.

It is therefore an object of the present invention to provide an automatic tool changer which is simple in structure and capable of exchanging tools in a substantially shorter time with safety.

According to the present invention, there is provided an automatic tool changer for automatically exchanging tools between a tool magazine and a machine tool spindle, the automatic tool changer comprising a tool exchange arm having chuck means adapted to grip said tools; rotation effecting means for rotating the tool exchange arm; and axial movement effecting means for effecting axial movement of the tool exchange arm characterised in that each of the rotation effecting means and the axial movement effecting means comprises a cam mechanism and a pressure fluid operated mechanism which are independent of each other, the cam mechanisms being operable to exchange a tool between the spindle and the chuck means, and the pressure fluid operated mechanisms being operable to exchange a tool between the tool magazine and the chuck means while a machining operation is being carried out.

Preferably, the chuck means comprises two angularly spaced apart chucks, the rotation effecting means comprising a first cam member for rotating the tool exchange arm through an angular distance such that each chuck can be brought into a first position in which a tool can be moved between the chuck and the spindle.

The axial movement effecting means preferably comprises a second cam member for effecting axial movement of the tool exchange arm when a chuck is in the said first position so as to introduce a tool into or withdraw it from the spindle.

The axial movement effecting means preferably comprises an arm-translating cylinder which is connected via a link lever to an arm drive shaft which drives and supports the tool exchange arm.

A rotatable shaft is preferably drivingly connected to the arm drive shaft and has a pinion which meshes with a rack, the rotation effecting means comprising an arm-rotating cylinder which is arranged to rotate the arm drive shaft and which is provided with the said rack. Each of the first and second cam members is preferably driven by a common motor.

Preferably, when the second cam member makes one revolution, the first cam member makes a half revolution.

Preferably, the motor has an output shaft which is provided with a driving gear which meshes with first and second driven gears, the first driven gear driving the first cam member which in turn drives the arm-rotating cylinder, and the second driven gear driving the second cam member via an idle gear, the second cam member driving the arm-translating cylinder.

A pressure fluid operated mechanism preferably comprises an hydraulic cylinder which operates the arm-translating cylinder, the said hydraulic cylinder having an hydraulic release circuit which constitutes a safety mechanism for preventing dislocation or malfunction of the tool exchange arm.

The cam mechanisms are preferably disposed in an housing on which is slidably mounted a slider which carries a lever support member, the lever support member supporting the said link lever.

In the preferred embodiment of the automatic tool changer, the tool exchange arm is fixed to an arm drive shaft which in operation is advanced and withdrawn relative to the spindle as a result of operation of the second cam member, while the tool exchange arm is operated to exchange the tool with that of a tool pot, as a result of operation of an hydraulic cylinder.

When the tool is exchanged, a rotation of the tool-exchange arm around the spindle may be carried out by driving the first cam member, while rotation of the tool-exchange arm around the arm-drive shaft may be carried out by the hydraulic cylinder to exchange the tool with that of the tool pot.

The exchange of new and old tools between the tool exchange arm and the tool pot may be carried out in quite a short time because a pressure fluid operated mechanism for actuating the arm-translating cylinder and the arm-rotating cylinder may be provided independently of the cam mechanism which is provided to actuate the tool exchange arm while the spindle is working. Further, the structure of the tool changer is simple. In addition, tools may be moved into and out of the tool pot along the shortest path via the same mechanisms, i.e., a rotating section and a translating section. Consequently, the time required for this exchange is greatly shortened.

Furthermore, in the preferred form of the present invention, an arm support member of the arm drive shaft which advances, withdraws and rotates the tool exchange arm is arranged to move up and down relative to a driving mechanism body, and since a detector for detecting the movement of the tool exchange arm is provided and stops the running of the apparatus when the arm drive shaft is raised to an abnormal level with violent movement, the apparatus can be used with safety during the exchanging of the tools.

The invention is illustrated, merely by way of example, in the accompanying drawings, in which:-

Fig. 1 is a partially cutaway front elevation of an automatic tool changer according to the invention, Fig. 1 showing the whole structure of the tool changer;

Fig. 2(a) is a cross-sectional view of a tool exchange arm forming part of the automatic tool changer shown in Fig. 1;

Fig. 2(b) is a cross-sectional view taken on line II-II of Fig. 2(a);

Fig. 3 is a cross-sectional view which shows a cam mechanism and an hydraulic mechanism of the automatic tool changer shown in Fig. 1, the mechanisms acting to translate the tool exchange arm;

Fig. 4(a) is a cross-sectional view which shows a cam mechanism of the automatic tool changer shown in Fig. 1, the cam mechanism acting to rotate the tool exchange arm;

Fig. 4(b) is a cross-sectional view taken on line IV-IV of Fig. 4(a);

Figs. 5(a), 5(b), 6(a), 6(b), 7(a), 7(b), 8(a), 8-(b), 9(a), 9(b), 10(a), 10(b) illustrate operations of the tool exchange arm of the automatic tool changer;

Fig. 11 is an horizontal cross-section of a slider portion of the automatic tool changer shown in Fig. 1, and

Fig. 12 is a cross-sectional view taken on line XII-XII of Fig. 11.

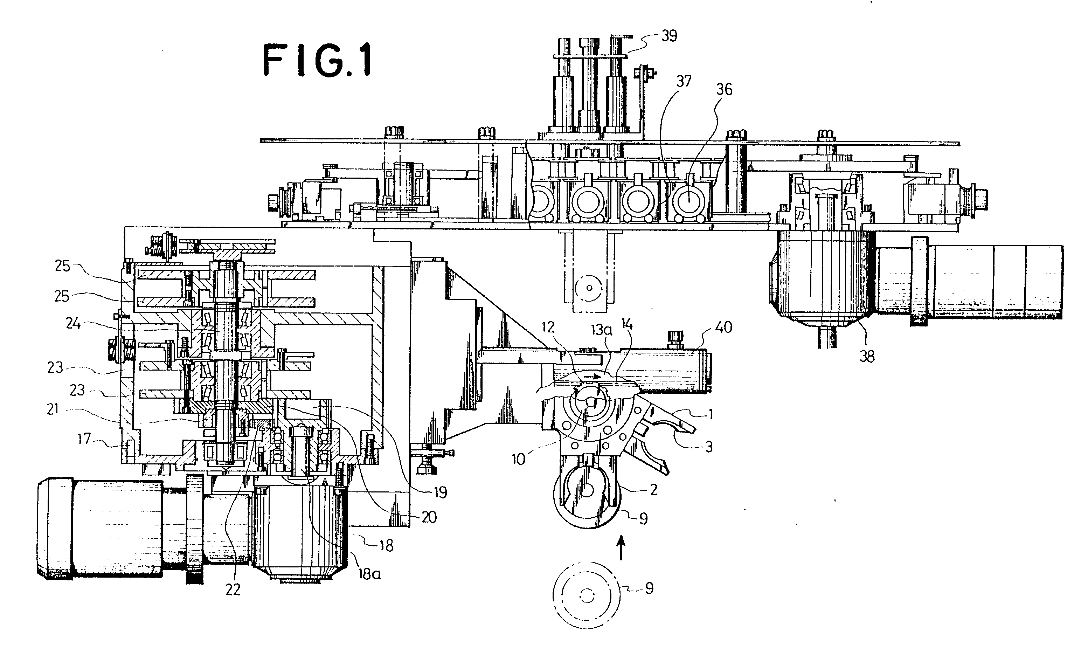

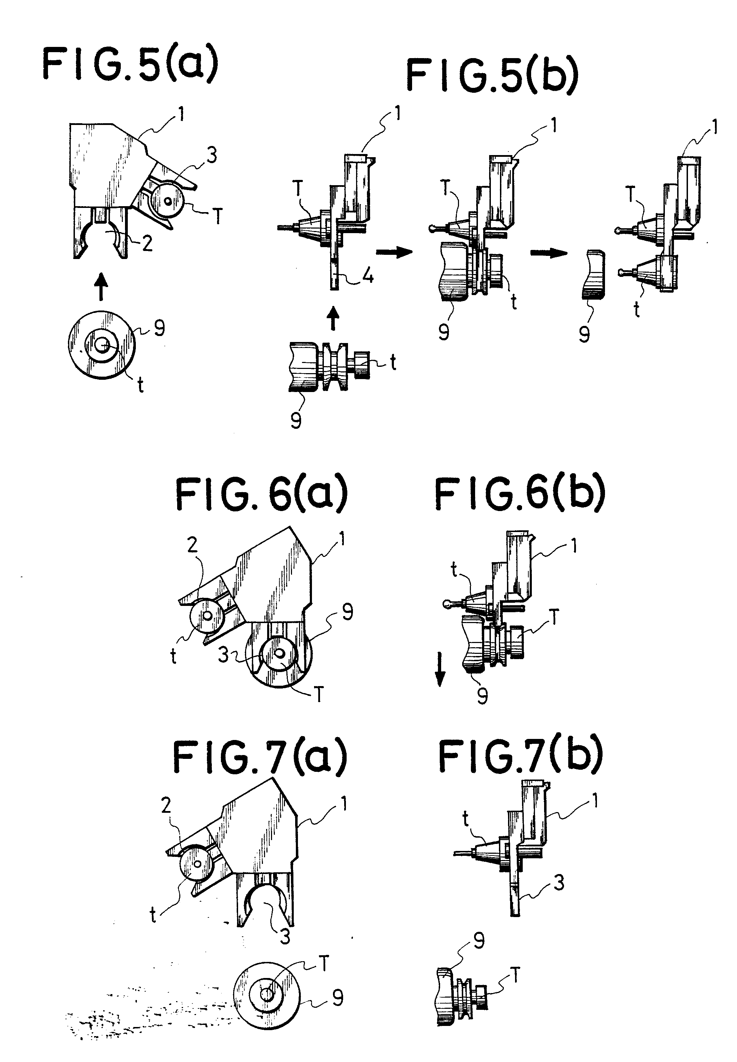

Referring to Fig. 1, a tool exchange arm 1 has at its front end chucks 2 and 3 which are angularly spaced apart from each other by 60 degrees and which are adapted to grip tools T,t, as shown in Fig. 5(a).

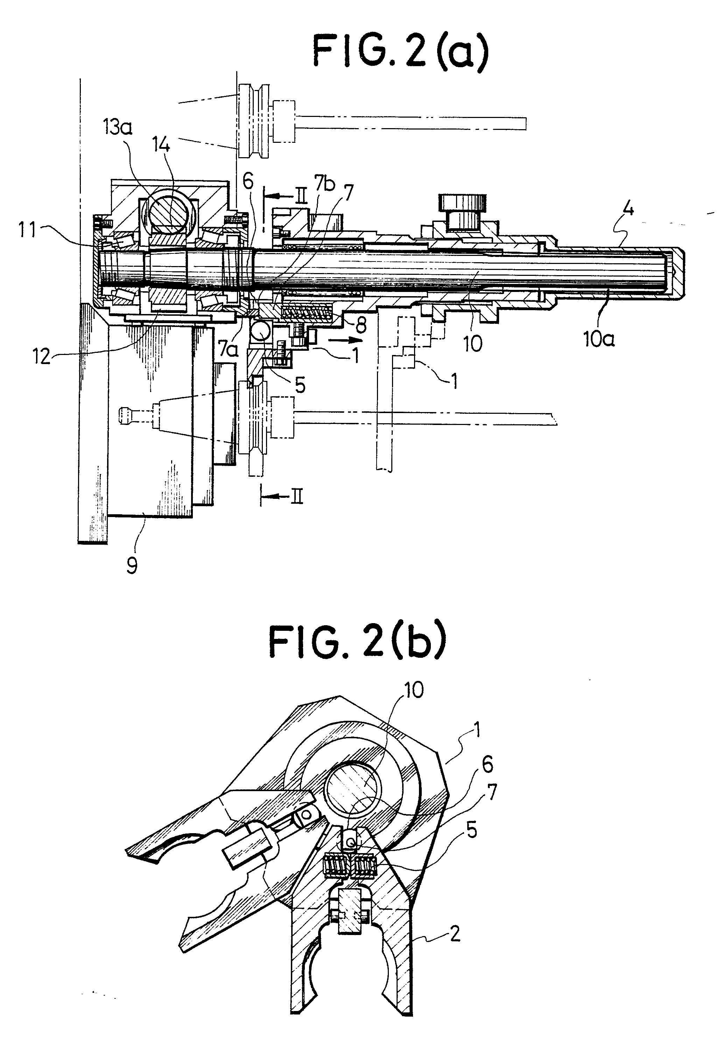

A chuck mechanism of the tool exchange arm 1 is now described by reference to Figs. 2(a) and 2(b).

The tool exchange arm 1 is fixed to an arm drive shaft 4 that is hollow. A spring 5 is mounted on the tool exchange arm 1 and extends at right angles to the axis of the arm drive shaft 4. A fitting pin 7 which bears against a support portion 6 of the tool exchange arm 1 is inserted in the arm drive shaft 4 and is biased by a spring 8.

When the tool exchange arm 1 is in the position indicated by the solid line in Fig. 2(a), the front end 7a of the fitting pin 7 bears against a stationary member and pushes the spring 8. Therefore, the pin 7 is not in contact with the support portion 6 of the tool exchange arm 1. In this state, only the force of the spring 5 is applied to the tool exchange arm 1. It is therefore easy in this state to mount a tool on a main spindle 9 of the machine tool or to remove the tool from the main spindle 9.

When the arm drive shaft 4 is driven axially, the front end 7a of the fitting pin 7 is made free. The pin 7 is fitted into the support portion 6 of the tool exchange arm 1 by the action of the spring 8. A tapering surface 7b of the pin 7 is pressed against a tapering surface of the support portion 6 with a large force of the spring 8 and so the tool exchange arm 1 can positively clamp the tool. Further the tool exchange arm 1 can rotate at a high speed.

The tool exchange arm 1 is translated along the axis of the main spindle 9 when the arm drive shaft 4 is translated. The tool exchange arm 1 is rotated when the arm drive shaft 4 is rotated.

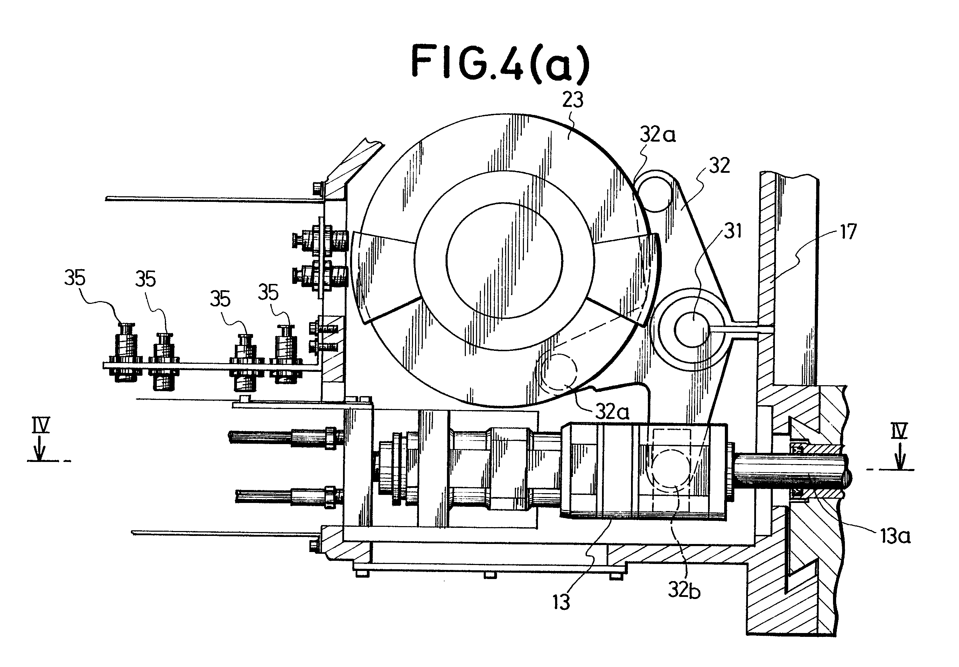

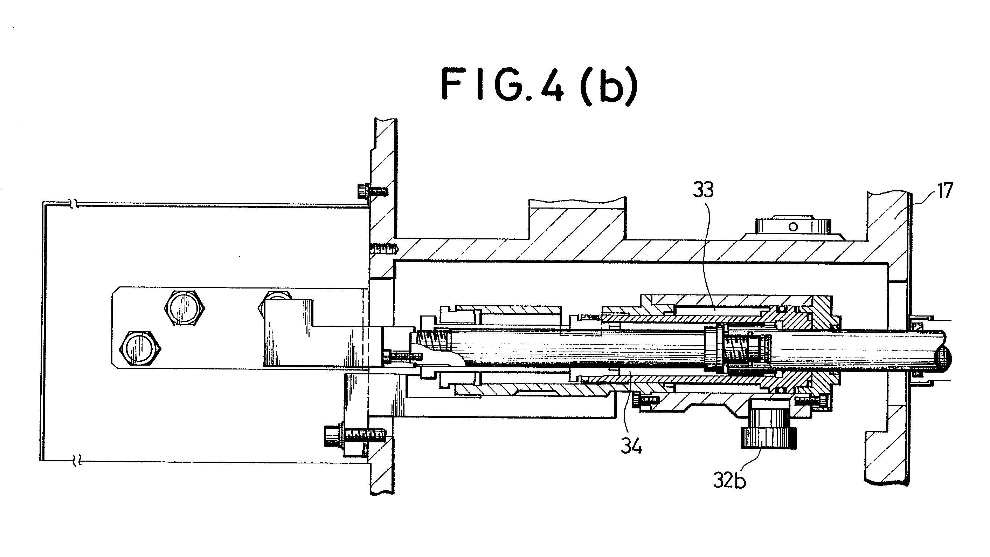

Referring to Fig. 2(a), a rotatable shaft 10 is mounted in the hollow arm drive shaft 4, and is held in the arm drive shaft 4 via a spline portion 10a, the rotatable shaft 10 also being held in bearings 11. A pinion 12 is fitted over, and fixed to, an end of the rotatable shaft 10. A rack 14 is formed on the underside of a cylinder rod 13a of an arm-rotating cylinder 13 (Fig. 4(a)), and is in mesh with the pinion 12. Thus, translational motion of the arm-rotating cylinder 13 is transformed into rotary motion of the arm drive shaft 4 and of the tool exchange arm 1 via the pinion 12, the rack 14, the rotatable shaft 10, and the spline portion 10a.

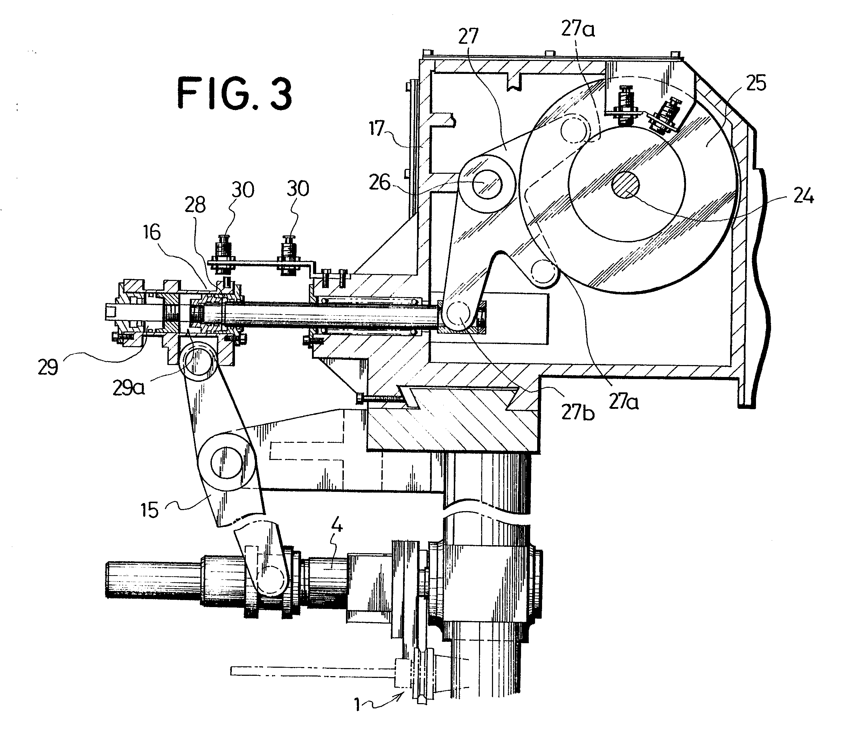

Referring to Fig. 3, the arm drive shaft 4 is connected to an arm-translating cylinder 16 via a link lever 15. As the arm-translating cylinder 16 translates, the tool exchange arm 1 translates along the axis of the main spindle 9 to press a tool into it or pull the tool out of it.

During a machining operation, the main spindle 9 is in a low position as indicated by the dot-and-dash line in Fig. 1. When the operation is finished and it is necessary to exchange the tool, the main spindle 9 is raised to a certain position indicated by the solid line by means of a numerical controller (not shown).

A mechanism for driving the tool exchange arm 1 is now described by reference to Figs. 1-4. This mechanism essentially consists of a cam mechanism which is described in detail below and which is mounted in a cam box or housing 17 (Fig. 1), the arm-rotating cylinder 13 which interlocks with the cam mechanism, and the arm-translating cylinder 16.

An electric motor 18 (Fig. 1) has an output shaft 18a to which a driving gear 19 is connected. One driven gear 20 is in mesh with the driving gear 19. Another driven gear 21 is in mesh with an idle gear 22, which is itself in mesh with the driving gear 19.

The driven gear 20 is fixed to a cam plate 23, which is free to rotate relative to a cam shaft 24. The driven gear 21 is connected to the cam shaft 24 via a span ring (not shown). Rotary motion of the driven gear 21 is transmitted to another cam plate 25 via the cam shaft 24.

The gear ratios of the driven gears 20 and 21 to the driving gear 19 are set at 1:2 and 1:1 respectively. Therefore, when the cam shaft 24 is caused to make one revolution by the motor 18, one cam plate 23 makes a half revolution, while the other cam plate 25 makes one complete revolution.

The relationship between the cam plate 25 and the arm drive shaft 4 is next described by reference to Fig. 3.

A link lever 27 is rotatable about a pivot 26. The ends 27a of the two arms of the link lever 27 are arranged to bear against the outer periphery of the cam plate 25. The end 27 b of another arm of the link lever 27 is connected to the arm-translating cylinder 16. Translational motion of the arm-translating cylinder 16 is transformed into translational motion of the arm drive shaft 4 via the link lever 15.

While the cam shaft 24 makes one revolution, the arm-translating cylinder 16 reciprocates once because of the profile of the cam plate 25. At this time, the arm drive shaft 4 reciprocates once axially of the spindle 9. Thus, the used tool is pulled out of the spindle 9, and a new tool is pressed into it.

In the embodiment shown in the drawings, the cam mechanism uses conjugate cams. Obviously other positive cam mechanisms such as grooved cams may be employed instead.

An hydraulic cylinder 28 (Fig. 3) in the arm-translating cylinder 16 is used to translate the tool exchange arm 1 when tools are exchanged between a tool pot (described later) and the tool exchange arm 1.

Hydraulic pressure can be applied when required to one of the hydraulic chambers 29,29a in the hydraulic cylinder 28 to translate the cylinder 28. The arm drive shaft 4 and the tool exchange arm 1 are then translated via the link lever 15.

The hydraulic cylinder 28 is provided with a hydraulic release circuit which acts as a safety mechanism.

If the cam mechanism 23,25 erroneously operates so as to rotate the link lever 27, then only the minimum hydraulic pressure necessary for translational motion is applied to the hydraulic chamber 29 of the hydraulic cylinder 28 via a balance valve (not shown). In this way, a pressure exceeding a pressure preset for the balance valve is applied to the balance valve unless the main spindle 9 is returned to the machining position, the tool exchange arm 1 is placed in position, or some other condition is met. Then, the hydraulic release circuit works. The effect of the rotary motion of the link lever 27 is cancelled out by the operation of the hydraulic cylinder 28. As a result, the tool exchange arm 1 is not translated.

In Fig. 3, there are shown limit switches 30 for controlling the position of the arm-translating cylinder 16 which translates the tool exchange arm 1.

Rotary motion of the arm drive shaft 4 and of the tool exchange arm 1 is next described by reference to Figs. 4(a) and 4(b).

Referring to Fig. 4(a), the cam plate 23 is so designed that it makes a half revolution while the cam shaft 24 makes one revolution. A link lever 32 is mounted for rotation about a pivot 31. The ends 32a of two arms of the link lever 32 are arranged to bear against the outer periphery of the cam plate 23. The end 32b of another arm of the link lever 32 is connected to the arm-rotating cylinder 13.

As the cam shaft 24 rotates, its rotary motion is transmitted to the cylinder rod 13a of the arm-rotating cylinder 13 via the link lever 32, so that the rod 13a makes a rectilinear motion.

Thus, the cylinder rod 13a of the cylinder 13 is made to make a rectilinear motion by rotation of the cam mechanism, i.e., the cam plate 23. This motion is transmitted to the arm shaft 4 via the pinion 12 and the rack 14. The result is that the shaft 4 rotates.

In this case, the cam plate 23 makes a half revolution. Therefore, while the arm-translating cylinder 16 reciprocates once, the cam plate 23 makes a rectilinear motion only in one direction. Consequently, the arm drive shaft 4 and the tool exchange arm 1 are rotated only in one direction by the pinion 12 and the rack 14.

When the cam shaft 24 makes an additional revolution, the cam shaft 23 makes a further half revolution, returning the cylinder rod 13a so as to rotate the tool exchange arm 1 to its original position. As a result, the arm drive shaft 4 and the tool exchange arm 1 rotate in the direction opposite to the foregoing direction.

Hydraulic cylinders 33 and 34 (Fig. 4(b)) are mounted in the arm-rotating cylinder 13. The cylinders 33 and 34 act to translate the cylinder rod 13a of the arm-rotating cylinder 13 and to rotate the arm drive shaft 4 and the tool exchange arm 1. The cylinders 33 and 34 are used to rotate the tool exchange arm 1 when tools are conveyed between the main spindle 9 and a tool pot (described later). When one tool is exchanged for another, the cam mechanism is used, because the tool exchange arm 1 is rotated through a relatively small angle. When tools are exchanged between a tool pot and the main spindle, the operation of the tool exchange arm 1 is controlled by the use of the hydraulic cylinders 33 and 34, because the tool exchange arm 1 must be rotated through a relatively large angle.

In Fig. 4(a) there are shown limit switches 35 for detecting the position of the arm-rotating cylinder 13.

A tool magazine which may be used with the tool changer described above and having a number of tool pots is next described by reference to Fig. 1.

As shown in Fig. 1, a tool magazine 37 is located above the automatic tool changer. The tool magazine 37 is provided with a number of tool pots 36, a servo-motor 38 for rotating the tool magazine 37 cyclically, and a tool pot-moving cylinder 39 for lowering a certain tool pot 36 from the tool magazine 37 to a tool standby position. Since the construction of the tool magazine 37 is not important so far as the present invention is concerned, its structure is not described in detail herein.

The operation of the automatic tool changer is next described by reference to Figs. 5-10. Figs 5-(a)-10(a) are front elevations of the tool exchange arm 1. Figs. 5(b)-10(b) are side elevations of the tool exchange arm 1.

Referring to Fig. 5(a), one chuck 2 of the tool exchange arm 1 holds no tool, while the other chuck 3 grips a new tool T. In this state, the main spindle 9 is in a machining position, and a used tool t is mounted on the main spindle 9. When a machining operation ends, the main spindle 9 is raised to a tool exchange position.

Fig. 5(b) illustrates how, when the cam plate 25 rotates to bring the arm-translating cylinder 16 into a withdrawal position, and the arm drive shaft 4 is driven via the link lever 15, the tool exchange arm 1 is caused to pull the used tool t out of the main spindle 9. That is to say, the main spindle 9 is raised to the tool exchange position in which the tool t is introduced into the open jaws of the chuck 2, the jaws of the chuck 2 are closed to grip the tool t, and the tool exchange arm 1 is then moved to a tool withdrawal position in which the tool t is withdrawn from the main spindle 9.

Referring next to Fig. 6(a), the tool exchange arm 1 is now rotated through 60 degrees in a clockwise direction as viewed in the figure. This is effected by rotation of the cam plate 23 so as to move the cylinder rod 13a of the arm-rotating cylinder 13 in the direction indicated by the respective arrow in Fig. 1. Then, the tool exchange arm 1 is rotated through 60 degrees in a clockwise direction via the pinion 12 and the rack 14. In this manner, the chuck 3 holding the new tool T is positioned axially of the main spindle 9.

Then, as mentioned previously, the cam plate 25 rotates so as to push the arm-translating cylinder 16. Fig. 6(b) illustrates the state in which the arm drive shaft 4 and the tool exchange arm 1 have pressed the new tool T into the main spindle 9 via the link lever 15 so as to mount the tool T in position. That is to say, the cam plate 25 moves the cylinder 16 so that the tool exchange arm 1 is moved away from the said tool withdrawal position so as to introduce the new tool T into the main spindle 9, after which the jaws of the chuck 3 are opened and the main spindle 9 is lowered into its machining position.

As shown in Fig. 7(a), one chuck 2 of the tool exchange arm 1 now holds the used tool t, while the other chuck 3 grips no tool. The main spindle 9 has been lowered to the machining position while holding the new tool T.

Rotary motion of the cam plate 25 is transmitted to the tool exchange arm 1 via the arm-translating cylinder 16 and the link lever 15, whereby the tool exchange arm 1 is translated. As the arm-rotating cylinder 13 makes a rectilinear motion, the cam plate 23 rotates so as thereby to rotate the tool exchange arm 1. Consequently, the time taken to exchange the tool can be made short as compared with the former apparatus. Further, the structure is made simple.

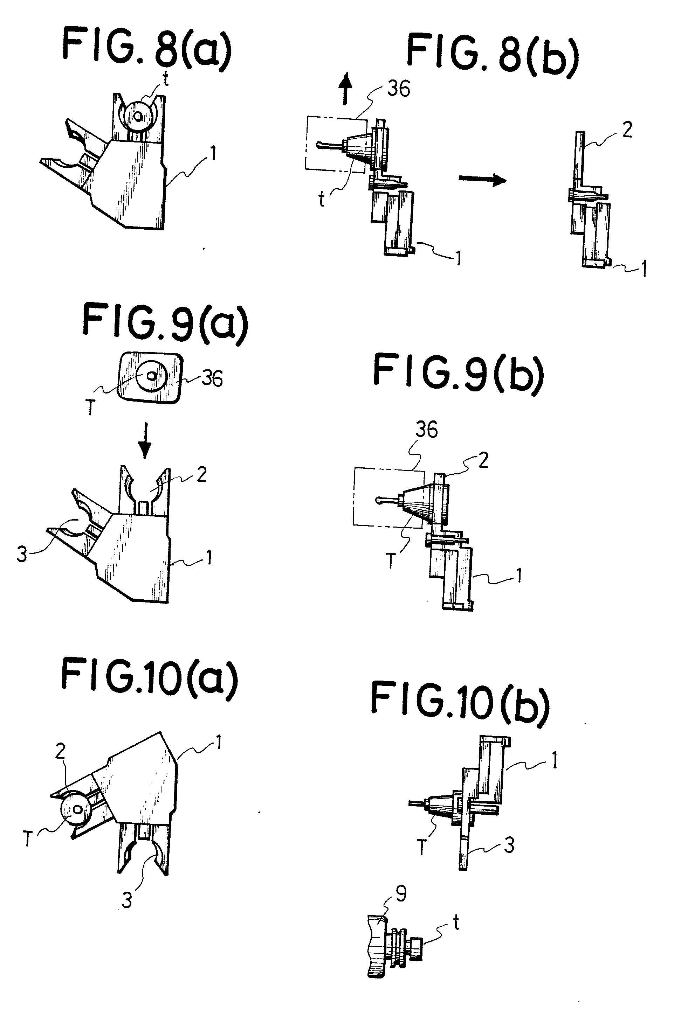

Figs. 8-10 illustrate the operation which is performed to exchange tools between the tool exchange arm 1 and a tool pot 36. The tool exchange arm 1 has now been rotated to the position shown in Fig. 8(a). The tool exchange arm 1 is moved backwards by the arm-translating cylinder 16 into the withdrawal position shown in Fig. 8(b). Subsequently, the hydraulic cylinders 33 and 34 in the arm-rotating cylinder 13 are actuated simultaneously to rotate the tool exchange arm 1 through 240 degrees in a counter-clockwise direction (see Fig. 8(a)). The operation of the hydraulic cylinders 33 and 34 is independent of the aforementioned operation using the cam mechanism 23. The rotary motion of the tool exchange arm 1 is effected by the translation of the cylinder rod 13a of the arm-rotating cylinder 13 to rotate the tool exchange arm 1 through a given angle via the pinion 12 and the rack 14.

At this time, the chuck 2 holding the used tool t is placed in the tool standby position. The arm-translating cylinder 16 presses the used tool t into a vacant tool pot 36 (Fig. 8(b)). Then, the tool pot-moving cylinder 39 operates to raise the pot 36 and return it into the tool magazine 37.

The servo-motor 38 then operates to move the tool magazine 37 cyclically so that a tool pot 36 for receiving the new tool T to be machined next may be placed above the tool standby position. The tool pot-moving cylinder 39 lowers the tool pot 36 for receiving the new tool T into the tool standby position. The new tool T is then mounted in the chuck 2 which previously held no tool (see Fig. 9).

Then, the arm-translating cylinder 16 pulls out the tool exchange arm 1 to a certain position. As shown in Fig. 10(a), the tool exchange arm 1 is then rotated through 240 degrees in a clockwise direction. The arm-translating cylinder 16 then pushes the tool exchange arm 1 to a certain position. These rotating, pressing, and withdrawing operations are performed by the operation of the hydraulic cylinders 28, 33, 34, as described above.

In this condition, the chuck 2 holding the new tool T is displaced 60 degrees to the left from the chuck 3 which holds no tool, as shown in Fig. 10-(a).

The rotating operations of the tool exchange arm 1 which have been described thus far in connection with Figs. 8-10 are concerned with the conveyance of tools between the tool exchange arm 1 and a tool pot 36. The tool exchange arm 1 is operated by the hydraulic mechanism comprising the hydraulic cylinders 28, 33, 34 while a machining operation on the main spindle 9 is being carried out. The hydraulic cylinders 28, 33, 34 are used in operating the arm-translating cylinder 16 and the arm-rotating cylinder 13.

A minimum movement is required to exchange tools between a tool pot 36 and the tool exchange arm 1. Hence, the operation is performed in a shorter time than usual. This operation can be almost completed while the tool is being lowered.

Then, the tools are exchanged, using the cam mechanism. During this process, the tool exchange arm 1 is rotated in a direction opposite to the direction shown in Figs. 5-7. After the exchange operation using the cam operation is completed, the tool exchange arm 1 is required to be rotated only through 120 degrees in a counter-clockwise direction to carry the tool to a tool pot 36. For this operation, it is necessary to actuate only the hydraulic cylinder 33 to effect rotation of the arm-rotating cylinder 13.

This series of operations of the tool exchange arm 1 is repeated to effect repid interchange of the used tool t and of the new tool T.

Next, a safety device is described to prevent uncontrolled rotation of the main spindle 9.

As shown in Fig. 1, during a machining operation, the main spindle 9 is in the position indicated by the dot-and-dash lines. When tools are interchanged after the machining operation has been finished, the main spindle 9 is raised in the direction indicated by the respective arrow. Then, the used tool is exchanged for a new one by the operation of the tool exchange arm 1. The operation of the main spindle 9 is numerically controlled and, therefore, there arises the possibility that the main spindle 9 may rotate uncontrollably, so damaging the tool exchange arm 1, a hollow arm support member 40, and other components.

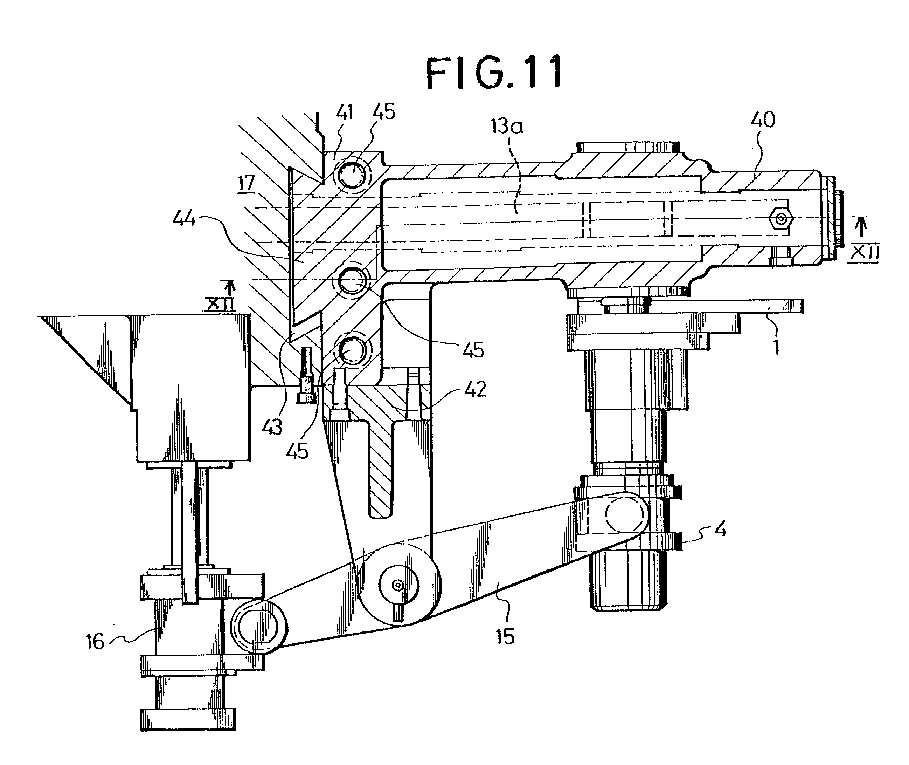

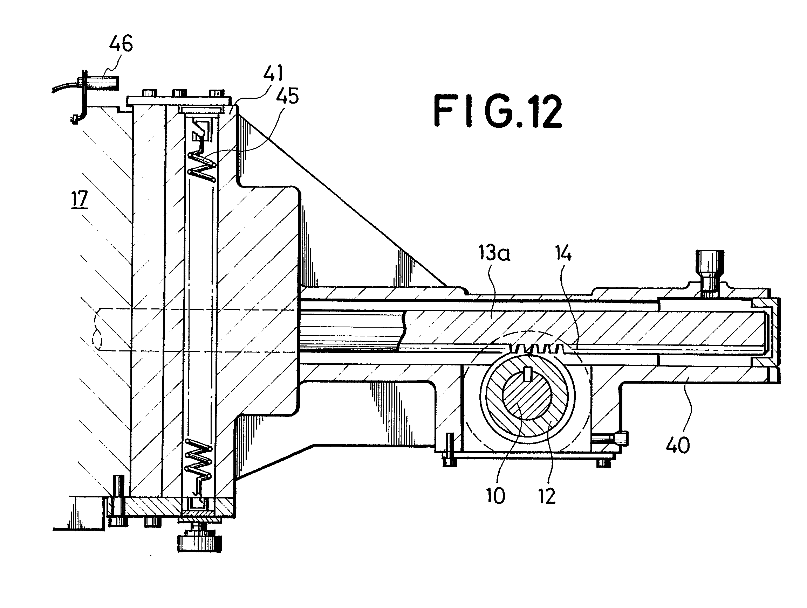

In order to prevent this from occurring, a construction is shown in Fig. 11 and Fig. 12 which comprises the hollow arm support member 40, which supports the arm shaft 4 and the rotating shaft 10, the arm support member 40 being fixed to a slider 41. The tool exchange arm 1 is fixed to the arm shaft 4. Also, a lever support member 42 that supports the link lever 15 interconnecting the arm-translating cylinder 16 and the arm shaft 4 is secured to the slider 41.

The slider 41 can move up and down relative to the cam box 17, or the body of the apparatus, which incorporates the cam mechanism, the link mechanism, and so on.

Referring to Fig. 11, dovetail grooves 43 are formed in the cam box 17 and extend vertically. Dovetail tenons 44 which fit in the grooves 43 are formed on the slider 41. The slider 41 can move up and down relative to the cam box 17, since the dovetail tenons 44 are mounted for movement in the dovetail grooves 43. A spring 45 is inserted in the slider 41 to permit the slider 41 to escape when it is elevated by a malfunction of the main spindle 9. When the slider 41 moves upwards, a limit switch 46 (Fig. 12) is actuated to stop the operation of the apparatus.

As indicated above, the tool magazine 37, which is provided with a number of tool pots 36, is moved cyclically, i.e. is reciprocated, by the servomotor 38. The tool pot 36 necessary for the next machining operation is placed under the tool pot-moving cylinder 39 for vertically moving the tool pots 36, the cylinder 39 is operated, and the respective tool pot 36 is moved downwards and made to be on standby at a tool standby position indicated by the phantom line in Fig. 1. These operations are numerically controlled.

In the apparatus described above, the operation for exchanging tools between the main spindle 9 and a tool pot 36 is divided into an operation for exchanging the tool on the main spindle 9 and an operation for carrying tools between the tool exchange arm 1 and the pot 36. The cam mechanism 23,25 is used for the former operation so as to allow it to be smoothly and rapidly performed. The latter carrying operation is carried out by using the hydraulic mechanism 28, 33, 34 which is independent of the cam mechanism 23, 25 while the machining on the main spindle 9 is being effected. Hence the exchange operation can be done more rapidly. This greatly enhances the productivity. Also, erroneous operation of the cam mechanism 23, 25 can be prevented because of the provision of the safety mechanism for the arm-translating cylinder 16 shown in Figs. 11 and 12.

Furthermore, the arm support member 40 that holds the tool exchange arm 1 and the arm shaft 4 is fixed to the slider 41. The lever support member 42 that holds the link lever 15 used to translate the tool exchange arm 1 is also fixed to the slider 41. The slider 41 is designed to move up and down relative to the cam box 17, or to the body of the apparatus, incorporating the cam mechanism, the link mechanism, and so on. If the main spindle 9 is elevated because of a malfunction of the main spindle 9, the slider 41 can move upwards together with the main spindle 9. Therefore, it is unlikely that the tool exchange arm 1 or the arm support member 40 will be damaged. Consequently, the safety of the apparatus is greatly enhanced.

## Claims

1. An automatic tool changer for automatically exchanging tools (T, t) between a tool magazine (37) and a machine tool spindle (9), the automatic tool changer comprising a tool exchange arm (1) having chuck means (2, 3) adapted to grip said tools (T, t); rotation effecting means (13, 23, 33, 34) for rotating the tool exchange arm (1); and axial movement effecting means (16, 25, 28) for effecting axial movement of the tool exchange arm (1) characterised in that each of the rotation effecting means (13, 23, 33, 34) and the axial movement effecting means (16, 25, 28) comprises a cam mechanism (23, 25) and a pressure fluid operated mechanism (33, 34, 28) which are independent of each other, the cam mechanisms (23, 25) being operable to exchange a tool (T, t) between the spindle (9) and the chuck means (2, 3), and the pressure fluid operated mechanisms (33, 34, 28) being operable to exchange a tool (T, t) between the tool magazine (37) and the chuck means (2, 3) while a machining operation is being carried out.

2. An automatic tool changer as claimed in claim 1 characterised in that the chuck means (2, 3) comprise two angularly spaced apart chucks (2, 3), the rotation effecting means (13, 23, 33, 34) comprising a first cam member (23) for rotating the tool exchange arm (1) through an angular distance such that each chuck (2, 3) can be brought into a first position in which a tool (T, t) can be moved between the chuck (2, 3) and the spindle (9).

3. An automatic tool changer as claimed in claim 2 characterised in that the axial movement effecting means (16, 25, 28) comprises a second cam member (25) for effecting axial movement of the tool exchange arm (1) when a chuck (2, 3) is in the said first position so as to introduce a tool (T, t) into or withdraw it from the spindle (9).

4. An automatic tool changer as claimed in any preceding claim characterised in that the axial movement effecting means (16, 25, 28) comprises an arm-translating cylinder (16) which is connected via a link lever (15) to an arm drive shaft (4) which drives and supports the tool exchange arm (1).

5. An automatic tool changer as claimed in claim 4 characterised in that a rotatable shaft (10) is drivingly connected to the arm drive shaft (4) and has a pinion (12) which meshes with a rack (14), the rotation effecting means (13, 23, 33, 34) comprising an arm-rotating cylinder (13) which is arranged to rotate the arm drive shaft (4) and which is provided with the said rack (14).

6. An automatic tool changer as claimed in claim 3 or in any claim appendant thereto characterised in that each of the first and second cam members (23, 25) is driven by a common motor (18).

7. An automatic tool changer as claimed in claim 6 characterised in that when the second cam member (25) makes one revolution, the first cam member (23) makes a half revolution.

8. An automatic tool changer as claimed in claim 7 when dependent upon claim 5 characterised in that the motor (18) has an output shaft (18a) which is provided with a driving gear (19) which meshes with first and second driven gears (20, 21), the first driven gear (20) driving the first cam member (23) which in turn drives the arm-rotating cylinder (13), and the second driven gear (21) driving the second cam member (25) via an idle gear (22), the second cam member (25) driving the arm-translating cylinder (16).

9. An automatic tool changer as claimed in claim 4 or in any claim appendant thereto characterised in that a pressure fluid operated mechanism comprises an hydraulic cylinder (28) which operates the arm-translating cylinder (16), the said hydraulic cylinder (28) having an hydraulic release circuit which constitutes a safety mechanism for preventing dislocation or malfunction of the tool exchange arm (1).

10. An automatic tool changer as claimed in claim 4 or in any claim appendant thereto characterised in that the cam mechanisms (23, 25) are disposed in an housing (17) on which is slidably mounted a slider (41) which carries a lever support member (42), the lever support member (42) supporting the said link lever (15).

11. An automatic tool changer for automatically exchanging tools between a magazine equipped with a number of tool pots (36) for receiving tools and the main spindle (9) of a machine tool, said automatic tool changer comprising:

a tool exchange arm (1) having two chucks (2, 3) for gripping tools;

an arm shaft (4) that supports the arm (1);

an arm-translating cylinder (16) which interlocks with the arm shaft (4) via a link lever (15) and translates the arm shaft (4) along an axis;

a rotating shaft (10) inserted in the arm shaft (4);

a rack (14) that is in mesh with a pinion (12) fixed to the rotating shaft (10);

an arm-rotating cylinder (13) formed integrally with the rack shaft (14) and acting to rotate the arm shaft (4);

a first cam element (25) for converting rotation of an electric motor (18) into translational motion of the arm (1);

a second cam element (23) for converting rotation of the motor (18) into rotary motion of the arm (1), the second cam element (23) co-operating with the first cam element (25) to constitute a cam mechanism for exchanging tools between the spindle (9) and the tool exchange arm (1); and

an hydraulic mechanism (28) provided independent of the first and second cam elements (25, 23) and acting to actuate the arm-translating cylinder (16) and the arm-rotating cylinder (13), the hydraulic mechanism (28) performing an operation for exchanging tools between one tool pot and the tool exchange arm (1) while a machining operation on the spindle (9) is being carried out.

# FIG.1

0 258 992

# FIG. 2 (a)

# FIG. 2 (b)

# FIG. 3

27  27a

17

26    25

28  30  30    24

16

29

29a

15

4

1

0 258 992

# FIG.4(a)

0 258 992

# FIG.4 (b)

0 258 992

# FIG.5(a)

# FIG.5(b)

# FIG.6(a)

# FIG.6(b)

# FIG.7(a)

# FIG.7(b)

FIG. 8(a)

FIG. 8(b)

FIG.9(a)

FIG.9(b)

FIG.10(a)

FIG.10(b)

# FIG.11

0 258 992

# FIG.12

0 258 992